Europäisches Patentamt

(19) European Patent Office

Office européen des brevets

(11) Publication number: **0 108 843**
**B1**

(12) EUROPEAN PATENT SPECIFICATION

(45) Date of publication of patent specification: **01.10.86**

(21) Application number: **82306009.0**

(22) Date of filing: **11.11.82**

(51) Int. Cl.⁴: **B 01 D 53/22, F 23 L 7/00**

(54) **High-temperature furnace having selectively permeable membranes for oxygen enrichment.**

(43) Date of publication of application:
**23.05.84 Bulletin 84/21**

(45) Publication of the grant of the patent:
**01.10.86 Bulletin 86/40**

(84) Designated Contracting States:
**DE FR GB NL**

(56) References cited:
**EP-A-0 024 718**
**EP-A-0 054 941**
**US-A-1 516 642**
**US-A-3 938 934**

(73) Proprietor: **Matsushita Electric Industrial Co., Ltd.**
**1006, Oaza Kadoma**
**Kadoma-shi Osaka-fu, 571 (JP)**

(73) Proprietor: **OSAKA GAS CO., LTD**
**1 Hiranomachi 5-chome, Higashi-ku**
**Osaka-shi, Osaka, 541 (JP)**

(72) Inventor: **Shimizu, Shoji**
**10-14, Higashi Tanakase Terado-cho**
**Mukou-shi Kyoto (JP)**
Inventor: **Saito, Yukihiro**
**3039-18, Sugao**
**Miyamae-ku Kawasaki (JP)**
Inventor: **Asakawa, Shirow**
**Zama-haitsu 3-510, 4-3011-18, Iriya**
**Zama-shi, Kanagawa-ken (JP)**
Inventor: **Ito, Yoshimasa**
**3112-20, Nozuta-cho**
**Machida-shi Tokyo (JP)**

(74) Representative: **Senior, Alan Murray et al**
**J.A. KEMP & CO 14 South Square Gray's Inn**
**London WC1R 5EU (GB)**

Courier Press, Leamington Spa, England.

EP 0 108 843 B1

# Description

The present invention relates to a high-temperature furnace which is energy efficient and capable of generating heat suitable for manufacture of ceramics, forging of steel and melting glass.

Air usually contains 21 percent oxygen and 79 percent nitrogen and that nitrogen provides no contribution to combustion and hinders the temperature from rising, so that a higher oxygen content results in a higher flame temperature. If the oxygen content is increased from the usual value of 21 percent to somewhere between 23 and 28 percent, the combustion temperature will rise very quickly to a certain level. However, there is no further significant increase in temperature if the oxygen content is increased above 28 percent. Higher flame temperature means a greater difference in temperature between the material to be heated and the flame. Therefore, the amount of calories available for heating increases with such temperature difference and greater energy savings is obtained.

There are several ways of increasing the oxygen content of air. The easiest way is to use an additional oxygen source, but this is costly and requires an utmost care for handling. Another approach involves the use of absorbents such as zeolite. However, the latter has yet to be put into practical use because stabilized operation is not yet guaranteed.

EP—A—0 054 941 discloses an oxygen enriching apparatus having oxygen permeable membranes which are in parallel spaced relationship to allow air to pass therebetween, causing oxygen molecules to selectively pass through the membranes to increase the oxygen content of the air to be utilized. It discloses, also, a high-temperature furnace comprising a combustion chamber having a burner for burning a mixture of air and fuel therein and an exhaust outlet for exhausting emissions therefrom to the outside, and means including an oxygen permeable membrane for selectively passing oxygen molecules therethrough for enriching the air with oxygen prior to mixing with the fuel.

EP—A—24 718 also discloses oxygen enrichment in a similar manner.

The aim of the present invention is to improve upon the prior proposals.

According to the present invention, there is provided a high-temperature furnace comprising a combustion chamber having a burner for burning a mixture of air and fuel therein and an exhaust outlet for exhausting emissions therefrom to the outside, and an oxygen permeable membrane for selectively passing oxygen molecules therethrough for enriching the air with oxygen prior to mixing with the fuel, characterised by heating means for heating the membrane, said heating means comprising a heat exchanger connected to said exhaust outlet for transferring thermal energy from said emissions to the air approaching membrane.

Preferably, the oxygen enricher comprises a plurality of longitudinally extending cells which are transversely spaced apart to form a first air passageway therebetween, each of the cells comprising a pair of oxygen permeable membranes spaced apart to form a second air passageway therebetween, and a suction fan being provided to cause air to flow through the first air passageway and a vacuum pump to cause air to flow through the second air passageway and through a conduit to the burner.

There may be a heat exchanger for transferring thermal energy from the emissions to the oxygen-enriched air to achieve higher flame temperature and higher combustion efficiency.

The present invention will be described in further detail by way of example only with reference to the accompanying drawings, in which:

Fig. 1 is a diagrammatic view of a first embodiment of the present invention;

Fig. 2 is a cross sectional view taken along the line 2—2 of Fig. 1;

Fig. 3 is a diagrammatic view of a modified form of the embodiment of Fig. 1.

Referring to the drawing, there is shown a first embodiment of the high-temperature furnace according to the present invention. The furnace comprises a combustion chamber 1 having a gas burner or nozzle 2 and an exhaust outlet 3 from which spent gases are exhausted to the outside. An oxygen enriching apparatus generally shown at 4 is provided to supply oxygen-enriched air through a conduit 5 to the burner 2. A fuel source 6 supplies gaseous fuel through a reservoir valve 7 to the burner 2 where it is mixed with the oxygen-enriched air at stoichiometric air-fuel ratio for maximum combustion efficiency.

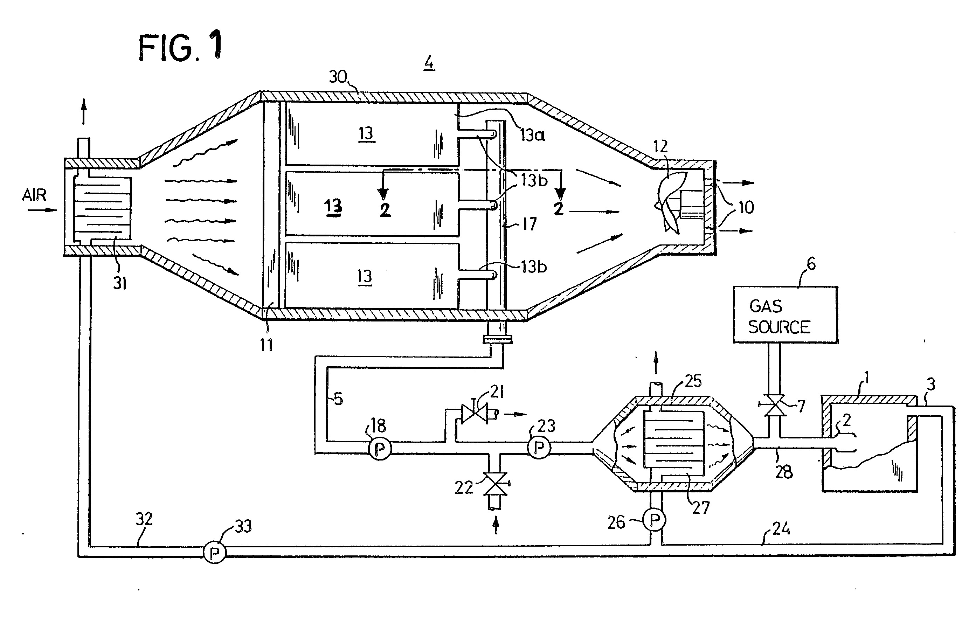

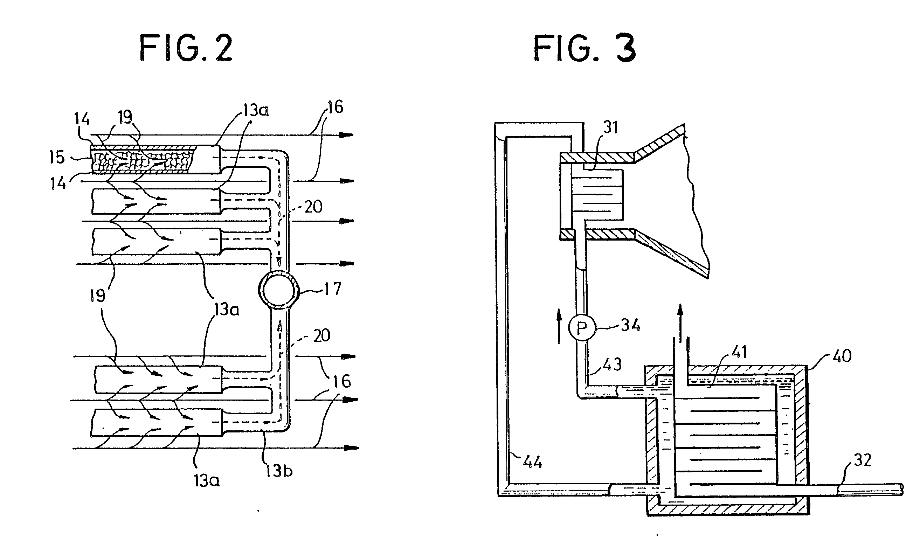

The oxygen enriching apparatus 4 comprises a housing 30 having an air intake opening and air exhaust openings 10, and an air filter 11 for screening dust and particles contained in air. A suction fan 12 is located adjacent to the outlet openings 10. Located between the filter 11 and the fan 12 is a set of oxygen enriching modules 13 stacked one upon another as illustrated in Fig. 1. Each module comprises a plurality of transversely spaced apart parallel cells 13a having a rectangular shape, as best be seen in Fig. 2. Each cell 13 comprises a pair of oxygen permeating membranes 14 affixed to the opposite sides of a rectangular frame, not shown, and a filling material 15 such as fibers between the membranes 14. Air is drawn by the suction fan 12 to generate parallel air streams that pass through the spaces between cells 13a as indicated by arrows 16 in Fig. 2. The cells 13a have their downstream ends connected by a manifold 13b to a common vertical pipe 17 which is connected to the conduit 5. In the conduit 5 is provided a vacuum pump 18 for drawing air through the oxygen permeable membranes 14 as indicated by arrows 19.

In a preferred embodiment, the oxygen permeable membranes 14 are formed of polydimethylsiloxane having an oxygen permeability of $10^{-10}$ to $10^{-7}$ cc.cm/cm$^2$.sec.cmHg and an oxygen-to-nitrogen permeability ratio of k:1, where k is equal to or greater 2.

As the air is drawn by the vacuum pump 18, oxygen molecules are selectively passed through the membranes 14 and the air inside the cells 13a is enriched with oxygen while the air outside the membranes becomes enriched with nitrogen. The oxygen-enriched air emerges from the cells 13a as indicated by broken-line arrows 20 and is conducted through pipe 17 and conduit 5 to vacuum pump 18. On the other hand, the nitrogen-enriched air is exhausted by the suction fan 12 to the outside through the openings 10.

In the conduit 5 are provided an oxygen regulator valve 21 for discharging excess oxygen to the outside, an air regulator valve 22 located downstream of the valve 21 for introducing outside air to the oxygen rich air, and a pump 23 for pressurizing the oxygen rich air to a level typically at 1000 mmAg. The pressurized air is mixed with fuel gas and discharged to the burner 2. The purpose of the pressurizing pump 23 is to eliminate the effect of pulsating pressure variations which would otherwise occur as a result of the sucking action of the vacuum pump 18.

An oxygen concentration as high as 30 percent can be obtained by the oxygen permeable membranes 14, which allows the air-fuel mixture to burn at a significantly high efficiency generating a heat as high as 1900°C. Since the oxygen permeating membranes are inexpensive in manufacture and reliable in operation, the furnace of the invention is economical both in installation and maintenance.

Still higher energy savings and temperatures are obtained by utilizing the exhaust heat of the combustion chamber 1. To this end, the exhaust port 3 of the combustion chamber 1 is connected by a conduit 24 to a heat exchanger 25 having a tube 27 therein. This heat exchanger is located between the pump 23 and a junction 28 where fuel and air are mixed. A pump 26 is provided to force the exhaust gases through the tube 27 to the outside for effecting the transfer of thermal energy from the exhaust heat to the pressurized, oxygen enriched air.

The oxygen permeable membrane 14 exhibits a temperature dependent characteristic which causes the flow rate and oxygen concentration to vary as a function of temperature. To maintain the oxygen content constant, the oxygen enriching apparatus 4 is formed of a housing 30 having a heat exchanger 31 located at the inlet opening thereof and connected by a conduit 32 from the conduit 24. A pump 33 is connected in the conduit 32 to force the exhaust gases through the exchanger 31 to the outside to effect the preheating of the air. The thermal energy of the preheated air raises the temperature of the oxygen permeable membranes 14, and as a result the amount of oxygen molecules passing through the membranes 14 increases with the exhaust temperature. Since the temperature of the preheated air varies as a function of the temperature in the combustion chamber 1, the oxygen enriching cells 13 and hence the oxygen concentration and the air flow rate are maintained constant for a given operating condition of the combustion chamber 1. Experiments showed that it is preferable that the oxygen permeable cells 13 be maintained at a temperature equal to or higher than 30°C.

Fig. 3 is an illustration of a modified embodiment of the invention. This embodiment comprises a water tank 40 having a heat exchanger 41 connected to the exhaust conduit 32 to effect the transfer of thermal energy from the exhaust gases to the water contained in the water tank 40. The heated water is directed by a pump 42 through a conduit 43 to the heat exchanger 31 and returns through a conduit 44 to the water tank. Due to the fact that water has a higher energy transfer efficiency than air, a greater amount of energy is extracted from the exhaust gases than is available with the previous embodiment.

## Claims

1. A high-temperature furnace comprising a combustion chamber (1) having a burner (2) for burning a mixture of air and fuel therein and an exhaust outlet (3) for exhausting emissions therefrom to the outside, and an oxygen permeable membrane (14) for selectively passing oxygen molecules therethrough for enriching the air with oxygen prior to mixing with the fuel, characterised by heating means for heating the membrane, said heating means comprising a heat exchanger (31) connected to said exhaust outlet (3) for transferring thermal energy from said emissions to the air approaching membrane (14).

2. A high-temperature furnace as claimed in claim 1, characterised in that said oxygen enriching means comprises:
a plurality of longitudinally extending cells (13a) which are transversely spaced apart to form a first air passageway therebetween, each of said cells comprising a pair of said membranes (14) and means for holding said membranes in spaced relationship to form a second air passageway therebetween;
first means (12) for causing air to flow through said first air passageway;
second means (18) for causing air to flow through said second air passageway; and
conduit means (5, 17) connected from one end of each of said cells (13a) to said burner for conducting the air passing through said second air passageways to said burner.

3. A high-temperature furnace as claimed in claim 2, characterised in that said second means comprises a vacuum pump (18) connected in said conduit means (5, 17) for generating a negative pressure in said conduit means with respect to the pressure at the opposite end of said cells (13a).

4. A high-temperature furnace as claimed in claim 3, further characterised by means (23) connected in said conduit means (5) between said vacuum pump (18) and said burner (2) for increasing the pressure of the air delivered from the vacuum pump (18).

5. A high-temperature furnace as claimed in any one of the preceding claims, characterised in that said membrane (14) comprises polydimethylsiloxane.

6. A high-temperature furnace as claimed in any one of the preceding claims, further characterised by a second heat exchanger (27) for transferring thermal energy from said emissions to the oxygen-enriched air.

7. A high-temperature furnace as claimed in any one of the preceding claims, further characterised in that said heating means are effective to heat said membrane (14) at a temperature equal to or higher than 30°C.

8. A high-temperature furnace as claimed in any preceding claim, further characterised by a third heat exchanger (40, 41) for transferring thermal energy from said emissions to liquid and supplying the heated liquid to the second heat exchanger (31) to allow it to transfer thermal energy from the heated liquid to said membrane (14).

9. A high-temperature furnace as claimed in any preceding claim, further characterised in that the heat exchanger (31) of the heating means for heating the membrane is located upstream of the air before passing through said membrane (14).

**Patentansprüche**

1. Hochtemperaturofen, der eine Brennkammer (1), die einen Brenner (2) zur Verbrennung eines Luft-Brennstoffgemischs sowie einen die Verbrennungsemissionen zur Außenseite abführenden Abgasauslaß (3) hat, und eine für Sauerstoff durchlässige Membran (14) zur Durchleitung von Sauerstoffmolekülen in ausgewählter Weise für eine Anreicherung der Luft von ihrer Mischung mit dem Brennstoff umfaßt, gekennzeichnet durch die Membran beheizende Heizeinrichtungen, die einen mit dem Abgasauslaß (3) verbundenen Wärmetauscher (31) zur Übertragung von Wärmeenergie von den Verbrennungsemissionen auf die der Membran (14) zuströmende Luft aufweisen.

· 2. Hochtemperaturofen nach Anspruch 1, dadurch gekennzeichnet, daß die Einrichtung zur Sauerstoffanreicherung umfaßt:

eine Mehrzahl von in Längsrichtung verlaufenden, in Querrichtung zur Ausbildung eines ersten Luftdurchtrittskanals zueinander beabstandeten Zellen (13a), von denen jede ein Paar vom Membranen (14) und eine Einrichtung zur Halterung der Membranen mit Abstand zueinander zur Ausbildung eines zweiten Luftdurchtrittskanals zwischen ihnen aufweist,

eine erste Einrichtung (12), die eine Luftströmung durch den ersten Luftdurchtrittskanal erzeugt,

eine zweite Einrichtung (18), die eine Luftströmung durch den zweiten Luftdurchtrittskanal erzeugt, und

Rohrleitungen (5, 17), die vom einen Ende einer jeden der Zellen (13a) ausgehen, mit dem Brenner verbunden sind und diesem die durch die zweiten Luftdurchtrittskanäle strömende Luft zuführen.

3. Hochtemperaturofen nach Anspruch 2, dadurch gekennzeichnet, daß die zweite Einrichtung eine Saugluftpumpe (18) umfaßt, die in die Rohrleitungen (5, 17) geschaltet ist und einen Unterdruck mit bezug zum Druck an dem entgegengesetzten Ende der Zellen (13a) in den Rohrleitungen erzeugt.

4. Hochtemperaturofen nach Anspruch 3, gekennzeichnet durch eine in die Rohrleitung (5) zwischen die Saugluftpumpe (18) und den Brenne (2) eingesetzte, den Druck der von der Saugluftpumpe (18) abgegebenen Luft erhöhende Einrichtung (23).

5. Hochtemperaturofen nach einem der vorhergehenden Ansprüche, dadurch gekennzeichnet, daß die Membran (14) Polydimethylsiloxan enthält.

6. Hochtemperaturofen nach einem der vorhergehenden Ansprüche, gekennzeichnet durch einen zweiten, von den Verbrennungsemissionen Wärmeenergie auf die mit Sauerstoff angereicherte Luft übertragenden Wärmetauscher (27).

7. Hochtemperaturofen nach einem der vorhergehenden Ansprüche, dadurch gekennzeichnet, daß die Heizeinrichtungen eine Aufheizung der Membran (14) auf eine Temperatur, die gleich 30°C oder höher ist, bewerkstelligen.

8. Hochtemperaturofen nach einem der vorhergehenden Ansprüche, gekennzeichnet durch einen dritten, von den Verbrennungsemissionen Wämeenergie auf eine Flüssigkeit übertragenden und die erwärmte Flüssigkeit dem zweiten Wärmetauscher (31), der eine Übertragung der Wärmeenergie von der erwärmten Flüssigkeit auf die Membran (14) bewerkstelligt, zuführenden Wärmetauscher (40, 41).

9. Hochtemperaturofen nach einem der vorhergehenden Ansprüche, dadurch gekennzeichnet, daß der Wärmetauscher (31) der die Membran beheizenden Heizeinrichtungen im Strömungsweg der die Membran (14) durchströmenden Luft stromoberhalb der Membran angeordnet ist.

**Revendications**

1. Four à température élevée, comprenant une chambre de combustion (1) comportant un brûleur (2) pour y brûler un mélange d'air et de combustible et une sortie (3) pour l'échappement des émissions de ladite chambre vers l'extérieur, et une membrane (14) perméable à l'oxygène pour laisser passer sélectivement les molécules d'oxygène afin d'enrichir l'air en oxygène avant son mélange avec le combustible, caractérisé par un moyen de chauffage pour chauffer la membrane, ledit moyen de chauffage comprenant un échangeur de chaleur (31) raccordé à ladite sortie (3) pour transférer l'énergie thermique desdites émissions à l'air se rapprochant de la membrane (14).

2. Four à haute température selon la revendication 1, caractérisé en ce que ledit moyen d'enrichissement en oxygène comprend:

une pluralité de cellules (13a) qui s'étendent longitudinalement et qui sont espacées transversalement les unes des autres, de manière à former entre elles un premier passage d'air, chacune desdites cellules comprenant une paire desdites membranes (14) et un moyen pour supporter lesdites membranes espacées l'une de l'autre, de manière à former entre elles un second passage d'air;

un premier moyen (12) pour faire s'écouler l'air à travers ledit premier passage d'air;

un second moyen (18) pour faire s'écouler l'air à travers ledit second passage d'air; et

un moyen formant conduit (5, 17) raccordant une des extrémités de chacune desdites cellules (13a) audit brûleur pour acheminer jusqu'audit brûleur l'air traversant lesdits second passage d'air.

3. Four à haute température selon la revendication 2, caractérisé en ce que ledit second moyen comprend une pompe à vide (18) montée dans ledit moyen formant conduit (5, 17) pour engendrer dans ledit conduit une pression négative par rapport à la pression régnant à l'extrémité opposée desdites cellules (13a).

4. Four à haute température selon la revendication 3, caractérisé en outre par un moyen (23) monté dans ledit conduit (5) entre ladite pompe à vide (18) et ledit brûleur (2) pour augmenter la pression de l'air fourni par la pompe à vide (18).

5. Four à haute température selon l'une quelconque des revendications précédentes, caractérisé en ce que ladite membrane (14) comprend un polydiméthylsiloxane.

6. Four à haute température selon l'une quelconque des revendications précédentes, caractérisé en outre par un second échangeur de chaleur (27) destiné à transférer l'énergie thermique desdites émissions à l'air enrichi en oxygène.

7. Four à haute température selon l'une quelconque des revendications précédentes, caractérisé en outre en ce que ledit moyen de chauffage a pour effet de chauffer ladite membrane (14) à une température égale ou supérieure à 30°C.

8. Four à haute température selon l'une quelconque des revendications précédentes, caractérisé en outre par un troisième échangeur de chaleur (40, 41) destiné à transférer l'énergie thermique desdites émissions au liquide et à fournir le liquide chauffé au second échangeur de chaleur (31) pour lui permettre de transférer l'énergie thermique du liquide chauffé à ladite membrane (14).

9. Four à haute température selon l'une quelconque des revendications précédentes, caractérisé en outre en ce que l'échangeur de chaleur (31) du moyen de chauffage destiné à chauffer la membrane se trouve en amont de l'air avant que celui-ci ne traverse ladite membrane (14).

FIG. 1

# FIG. 2

# FIG. 3